# EUROPEAN PATENT APPLICATION

(11) **EP 4 411 879 A1**
(43) Date of publication of application: **07.08.2024**
(21) Application number: 23220554.2
(22) Date of filing: 28.12.2023
(51) Int. Cl.: H01M 4/36, H01M 4/131

(54) **POSITIVE ELECTRODE PLATE AND NON-AQUEOUS ELECTROLYTE SECONDARY BATTERY**

(30) Priority: 01.02.2023 JP 2023013749
(71) Applicant: Prime Planet Energy & Solutions, Inc., Chuo-ku Tokyo 103-0022 (JP)
(72) Inventor: MATSUMOTO, Hayaki, Tokyo, 103-0022 (JP)
(74) Representative: Kuhnen & Wacker Patent- und Rechtsanwaltsbüro PartG mbB

(57) **Abstract**

The present disclosure relates to a positive electrode plate (10) including an active material layer (12) and a core body (11), wherein the active material layer (12) includes an active material particle, the active material particle includes a large particle (23) and a small particle (24), and a larger amount of the large particle (23) is present in a vicinity of a surface of the active material layer (12) on the core body (11) side than in a vicinity of a surface of the active material layer (12) opposite to the core body (11) side. The present disclosure further relates to a non-aqueous electrolyte secondary battery (200) including the positive electrode plate (10). According to the present disclosure, there are provided: the positive electrode plate (10) having excellent cycling performance and output resistance; and the non-aqueous electrolyte secondary battery (200) including the positive electrode plate (10).

## Description

### CROSS REFERENCE TO RELATED APPLICATIONS

This nonprovisional application is based on Japanese Patent Application No. 2023-013749 filed on February 1, 2023 with the Japan Patent Office, the entire contents of which are hereby incorporated by reference.

### BACKGROUND OF THE INVENTION

### Field of the Invention

The present invention relates to a positive electrode plate and a non-aqueous electrolyte secondary battery (hereinafter also referred to as a battery) including the positive electrode plate.

### Description of the Background Art

WO 2019/069459 discloses an electrode plate in which a composite material layer and a coating layer, which respectively include particles having different particle sizes, are stacked.

### SUMMARY OF THE INVENTION

The electrode plate described in WO 2019/069459 is insufficient in cycling performance and output resistance. An object of the present invention is to provide a positive electrode plate and a battery, each of which is excellent in cycling performance and output resistance.

The present invention provides the following positive electrode plate and battery.
[1] A positive electrode plate comprising an active material layer and a core body, wherein the active material layer includes an active material particle, the active material particle includes a large particle and a small particle, and a larger amount of the large particle is present in a vicinity of a surface of the active material layer on the core body side than in a vicinity of a surface of the active material layer opposite to the core body.
[2] The positive electrode plate according to [1], wherein in a cross section of the active material layer, a ratio of a total area of the large particle present in the vicinity of the surface opposite to the core body to a total area of the large particle present in the vicinity of the surface on the core body side is 0.2 or more and less than 1.0.
[3] The positive electrode plate according to [1] or [2], wherein the small particle includes a single-crystal particle or a polycrystalline particle.
[4] The positive electrode plate according to any one of [1] to [3], wherein the large particle has a grain boundary.
[5] The positive electrode plate according to any one of [1] to [4], wherein the large particle includes a secondary particle in which a primary particle is aggregated.
[6] The positive electrode plate according to any one of [1] to [5], wherein a particle packing density of the active material layer is 3.0 to 3.8 g/cm³.
[7] The positive electrode plate according to any one of [1] to [6], wherein the active material layer has a deep layer disposed on the core body side, and a surficial layer disposed on a side of the deep layer opposite to the core body side.
[8] The positive electrode plate according to any one of [1] to [7], wherein a mass ratio (a surficial layer / a deep layer) of the large particle in the surficial layer and the large particle in the deep layer is more than 1/9 and less than 1.
[9] A non-aqueous electrolyte secondary battery comprising the positive electrode plate according to any one of [1] to [8].

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a schematic diagram showing an exemplary configuration of a positive electrode in the present embodiment.
Fig. 2 is a schematic diagram showing another exemplary configuration of the positive electrode in the present embodiment.
Fig. 3 is a schematic flowchart showing a method of manufacturing the positive electrode.
Fig. 4 is a schematic diagram showing an exemplary configuration of a battery in the present embodiment.
Fig. 5 is a schematic diagram showing an exemplary configuration of the electrode assembly in the present embodiment.
Fig. 6 shows a cross sectional image of an active material layer of an Example 1.

### DESCRIPTION OF THE PREFERRED EMBODIMENTS

Hereinafter, embodiments of the present invention will be described with reference to figures, but the present invention is not limited to the below-described embodiments. In each of all the figures described below, a scale is appropriately adjusted to facilitate understanding of each component, and the scale of each component shown in the figures does not necessarily coincide with the actual scale of the component.

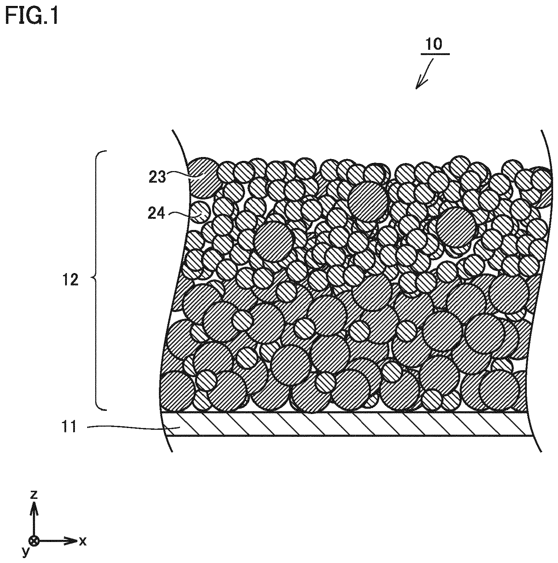

Fig. 1 is a schematic diagram showing an exemplary configuration of a positive electrode plate in the present embodiment. A positive electrode plate 10 includes a core body 11 and an active material layer 12. Core body 11 is an electrically conductive sheet. Core body 11 may be, for example, an aluminum alloy foil or the like. Core body 11 may have a thickness of, for example, 10 µm to 30 µm. The thickness of core body 11 can be measured by a constant-pressure thickness measurement device (thickness gauge). Active material layer 12 can be disposed on a surface of core body 11. Active material layer 12 may be disposed, for example, on one or both of front and rear surfaces of core body 11. Active material layer 12 may have a thickness of, for example, 10 µm to 200 µm. The thickness of active material layer 12 is measured in a cross sectional SEM image of active material layer 12. An observation plane can be parallel to the thickness direction of active material layer 12. The thickness of active material layer 12 is measured at five or more positions. The thickness of active material layer 12 is defined as an arithmetic average of the thicknesses at the five or more positions. A particle packing density of active material layer 12 can be, for example, 3.0 to 3.8 g/cm³ or more.

Active material layer 12 includes active material particles. The active material particles include a first particle group and a second particle group. The first particle group is constituted of large particles 23. The second particle group can be constituted of small particles 24. A larger amount of large particles 23 is present in the vicinity of a surface of active material layer 12 on the core body 11 side than in the vicinity of a surface of active material layer 12 opposite to core body 11. The present inventors have found that: a decrease in the cycling performance is caused by occurrence of a crack in an active material particle due to intercalation and de-intercalation of lithium (Li) during a cycle test; and a crack tends to be less likely to be caused in each of the small particles and a crack tends to be more likely to be caused in each of the large particles. It has been also found that: the output characteristic tends to be improved as the packing density of the active material particles is higher; and the packing density of the small particles tends to be less likely to be improved and the packing density of the large particle tends to be more likely to be improved. In view of these, a large amount of the small particles in each of which a crack is less likely to be caused were disposed on the side (surficial layer side) opposite to core body 11 in which intercalation and de-intercalation of Li occur frequently and a large amount of the large particles were disposed on the core body 11 side (deep layer side), with the result that both excellent cycling performance and excellent output resistance were successfully achieved.

In a cross section of active material layer 12, a ratio of a total area of large particles 23 present in the vicinity of the surface opposite to core body 11 to a total area of large particles 23 present in the vicinity of the surface on the core body 11 side may be, for example, 0.2 or more and less than 1.0, is preferably 0.25 or more and 0.9 or less, and is more preferably 0.3 or more and 0.8 or less. Each of the total areas of large particles 23 in the cross section of active material layer 12 is measured in accordance with a method described in the below-described section "Examples".

The vicinity of the surface of active material layer 12 opposite to core body 11 may be a region that includes the surface of active material layer 12 opposite to core body 11 and that is present to extend from the surface of active material layer 12 opposite to core body 11 to 1/5, 2/5, 1/2, 3/5, or 4/5 of the thickness of active material layer 12 in the thickness direction of active material layer 12. The vicinity of the surface of active material layer 12 on the core body 11 side can be a region that includes the surface of active material layer 12 on the core body 11 side and that is other than the vicinity of the surface of active material layer 12 opposite to core body 11.

Each of the large particles may be a secondary particle (aggregated particle) in which a primary particle is aggregated. The large particle may have a grain boundary. Each of the small particles may be a single-particle. The small particle preferably includes a single-crystal particle or a polycrystalline particle. Since the single-crystal particle or polycrystalline particle has a little (or no) grain boundary, a crack tends to be less likely to be caused by intercalation and de-intercalation of Li. Since the single-crystal particle or polycrystalline particle tends to have high resistance, it tends to be difficult to use the single-crystal particle or polycrystalline particle as the large particle. Since the large amount of the small particles, each of which is the single-crystal particle or polycrystalline particle that is less likely to have a crack caused therein and that has a little grain boundary, are disposed on the side (surficial layer side) opposite to the core body side on which intercalation and de-intercalation of Li occur frequently and the large amount of the large particles each having a grain boundary are disposed on the deep layer side, particles can be suppressed from being cracked due to the intercalation and de-intercalation of Li, with the result that the cycling performance can be improved and the electrode plate resistance can be suppressed from being increased.

An average particle size (D50) of the first particle group (large particles) may be, for example, 10 µm or more and 20 µm or less, and is preferably 14 µm or more and 18 µm or less. An average primary particle size may be, for example, 0.1 µm or more and 3 µm or less, and is preferably 0.5 µm or more and 2.5 µm or less. An average particle size (D50) of the second particle group (small particles) may be, for example, 2 µm or more and 6 µm or less, and is preferably 3 µm or more and 6 µm or less. In the present specification, the average particle size (D50) represents a particle size (hereinafter, also referred to as D50) corresponding to a cumulative particle volume of 50% from the small particle size side with respect to the total particle volume in the volume-based particle size distribution. The average particle size (D50) can be measured by a laser diffraction/scattering method. An average primary particle size is an average of distances in ten primary particles randomly extracted on the SEM image, each of the distances being a distance between two most distant points on the outline of each of the ten primary particles. A BET specific surface area of the active material particles may be, for example, 0.5 m²/g to 1.5 m²/g.

Each of the active material particles may be a particle containing a lithium transition metal composite oxide. A crystal structure of the lithium transition metal composite oxide is not particularly limited, and may be a lamellar structure, a spinel structure, an olivine structure, or the like. As the lithium transition metal composite oxide, a lithium transition metal composite oxide including at least one of Ni, Co, and Mn as a transition metal element is preferable, and specific examples thereof include a lithium-nickel-based composite oxide, a lithium-cobalt-based composite oxide, a lithium-manganese-based composite oxide, a lithium-nickel-manganese-based composite oxide, a lithium-nickel-cobalt-manganese-based composite oxide, a lithium-nickel-cobalt-aluminum-based composite oxide, a lithium-iron-nickel-manganese-based composite oxide, and the like. When the active material particle includes nickel, a ratio of the content of nickel to the metal elements other than lithium in the active material particle may be, for example, 60 mol% or less. The active material particle may be a surface-coated particle.

The active material particle may include, for example, a lamellar metal oxide. The lamellar metal oxide is represented by the following formula: Li₁₋ₐ₁Niₓ₁Me¹₁₋ₓ₁O₂. In the formula (1), "a1" satisfies the relation "-0.3≤a1≤0.3", "x1" satisfies the relation "0.1≤x1≤0.95". "Me¹" represents at least one selected from a group consisting of Co, Mn, Al, Zr, Ti, V, Cr, Fe, Cu, Zn, Mo, Sn, Ge, Nb, and W.

The content of the active material particles in active material layer 12 may be, for example, 70 wt% or more, is preferably 80 to 99 wt%, and is more preferably 90 to 99 wt% or less, based on 100 wt% of the total solid content of active material layer 12 as a reference. A mass ratio (surficial layer/deep layer) of the large particles present in the vicinity of the surface of active material layer 12 opposite to core body 11 (or in the below-described surficial layer) to the large particles present in the vicinity of the surface of active material layer 12 on the core body 11 side (or in the below-described deep layer) is, for example, more than 1/9 and less than 1, is preferably 1/4 or more and 2/3 or less, and is more preferably 3/7. A mass ratio (small particles/large particles) of the small particles to the large particles in the vicinity of the surface of active material layer 12 on the core body 11 side (or in the below-described deep layer) may be, for example, more than 1/9 and less than 1, is preferably 1/4 or more and 2/3 or less, and is more preferably 3/7. A mass ratio (small particles/large particles) of the small particles to the large particles in the vicinity of the surface of active material layer 12 opposite to core body 11 (or in the below-described surficial layer) may be, for example, 1 or more and 9 or less, is preferably 1.5 or more and 4 or less, and is more preferably 7/3.

Active material layer 12 can include a binder and a conductive auxiliary agent. Examples of the binder include polyvinylidene difluoride (PVDF), polytetrafluoroethylene (PTFE), polyimide (PI), polyamide (PA), polyamide-imide (PAI), butadiene rubber (BR), styrene-butadiene rubber (SBR), nitrile-butadiene rubber (NBR), styrene-ethylene-butylene-styrene block copolymer (SEBS), carboxymethyl cellulose (CMC), a combination thereof, and the like. The content of the binder in active material layer 12 may be, for example, 0.5 to 10 wt%, and is preferably 1.0 to 5 wt%, based on 100 wt% of the total solid content of active material layer 12 as a reference.

The conductive auxiliary agent can include carbon black such as acetylene black (AB), another carbon material (for example, graphite), a carbon nanotube, or the like. The content of the conductive auxiliary agent in active material layer 12 may be, for example, 0.05 to 2.0 wt% and is preferably 0.10 to 1.0 wt%, based on 100 wt% of the total solid content of active material layer 12 as a reference.

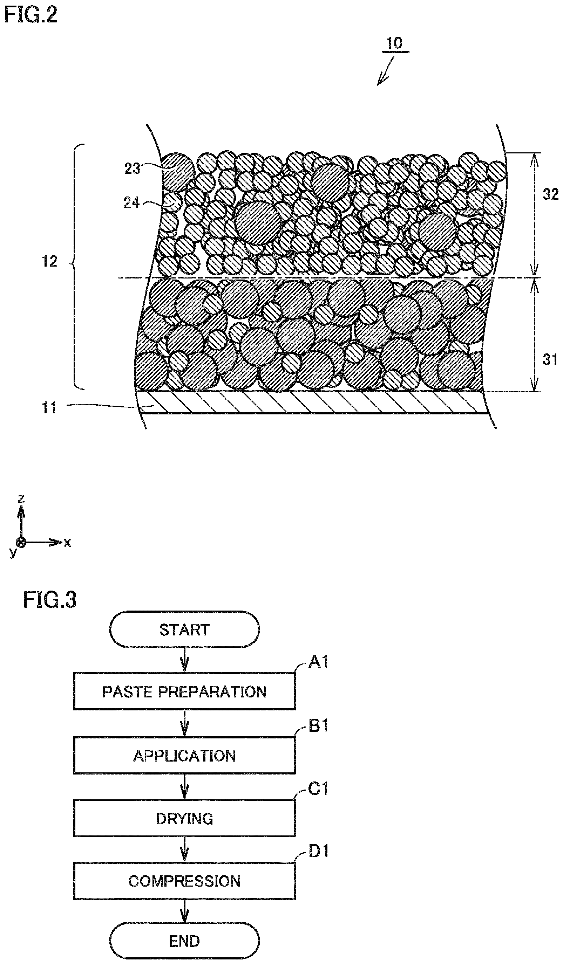

As shown in Fig. 2, active material layer 12 can include: deep layer 31 disposed on the core body 11 side; and surficial layer 32 disposed on a side of the deep layer opposite to the core body 11 side. Active material layer 12 may have a two-layer structure consisting of the deep layer and the surficial layer. Deep layer 31 and surficial layer 32 may have the same thickness or different thicknesses. A ratio (deep layer/surficial layer) of the thicknesses of deep layer 31 and surficial layer 32 is preferably 4/5 to 5/4.

A method of manufacturing positive electrode plate 10 includes positive electrode slurry preparation (A1), application (B1), drying (C1), and compression (D1) as shown in Fig. 3. In the positive electrode slurry preparation (A1), a positive electrode slurry including the active material particles and CNT is prepared using any stirring device. The positive electrode slurry is prepared by dispersing the active material particles in a dispersion medium (organic solvent such as N-methyl-2-pyrrolidone (NMP), tetrahydrofuran (THF), dimethylformamide (DMF), methyl ethyl ketone (MEK), or dimethyl sulfoxide (DMSO)). The positive electrode slurry may have a solid content concentration of, for example, 40% to 80%.

In the application (B1), the positive electrode slurry may be applied onto a surface of a substrate using any application device so as to form a coating film. When the active material layer includes the deep layer and the surficial layer, a first coating film for the deep layer and a second coating film for the surficial layer may be formed sequentially or substantially simultaneously. For example, a slurry for the deep layer can be applied onto one surface of the core body to form the first coating film, and then a slurry for the surficial layer can be applied thereonto to form a second coating film. In the present specification, the term "coating film" may collectively represent both the first coating film and the second coating film. The drying (C1) can include heating and drying the coating film by, for example, a hot air dryer or the like so as to form a dried coating film. The compression (D1) can include compressing the dried coating film using any compression device so as to form active material layer 12, thereby obtaining positive electrode plate 10. Positive electrode plate 10 can be cut into a predetermined planar size in accordance with a specification of a battery. Positive electrode plate 10 may be cut to have a strip-shaped planar shape, for example. Positive electrode plate 10 may be cut to have a quadrangular planar shape, for example.

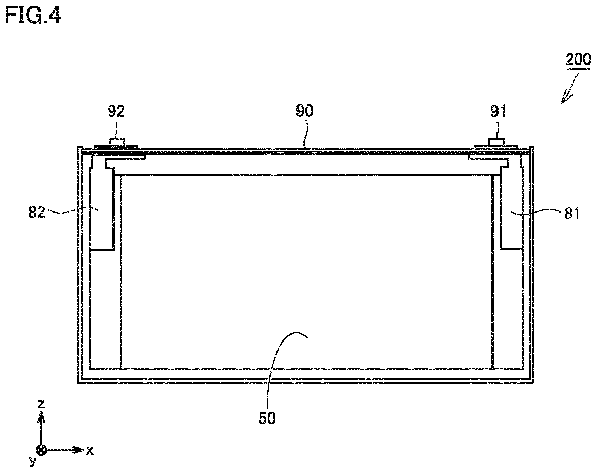

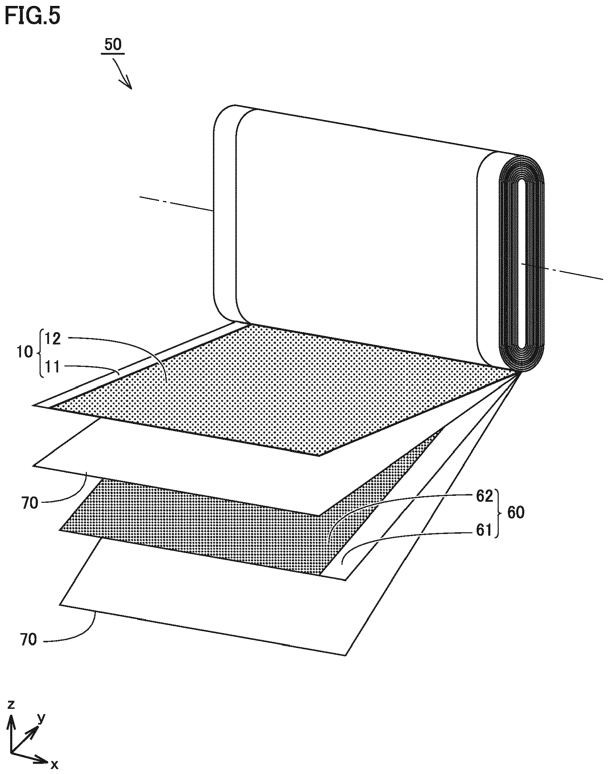

The battery can be a lithium ion battery. Fig. 4 is a schematic diagram showing an exemplary lithium ion battery in the present embodiment. A battery 200 shown in Fig. 4 can be, for example, a lithium ion battery for a main electric power supply, a motive power assisting electric power supply, or the like in an electrically powered vehicle. Battery 200 accommodates an electrode assembly 50 and a non-aqueous electrolyte (not shown) in an exterior package 90. Electrode assembly 50 is connected to a positive electrode terminal 91 by a positive electrode current collecting member 81. Electrode assembly 50 is connected to a negative electrode terminal 92 by a negative electrode current collecting member 82. Fig. 5 is a schematic diagram showing an exemplary electrode assembly in the present embodiment. Electrode assembly 50 is a wound type. Electrode assembly 50 includes positive electrode plate 10, a separator 70, and a negative electrode plate 60. That is, battery 200 includes positive electrode plate 10. Positive electrode plate 10 includes active material layer 12 and core body 11. Negative electrode plate 60 includes a negative electrode active material layer 62 and a negative electrode substrate 61.

### [Examples]

Hereinafter, the present invention will be described in more detail with reference to examples. "%" and "parts" in the examples are mass% and parts by mass unless otherwise stated particularly.

### <Measurement for Average Particle Sizes (D50) of First and Second Lithium Composite Oxide Particles>

Volume-based particle size distributions of the first and second lithium composite oxide particles were measured using a commercially available laser diffraction/scattering type particle size distribution measurement device, and a particle size corresponding to a cumulative frequency of 50 volume% from a fine particle side having a small particle size was found as each of the average particle size (D50) of the first lithium composite oxide particles and the average particle size (D50) of the second lithium composite oxide particles.

### <Measurement for Mixing Ratio of First and Second Lithium Composite Oxide Particles as Found from Cross Section of Electrode Plate>

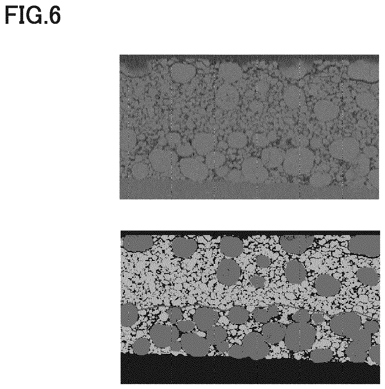

A cross section observation sample of the positive electrode sheet was produced by a cross section polisher process. A SEM was used to obtain an SEM image of this sample. The image processing software "GIMP" was used to find the areas of the first and second lithium composite oxide particles by differently coloring the first and second lithium composite oxide particles in the SEM image, and an area ratio of the first and second lithium composite oxide particles was measured. Fig. 6 shows a cross sectional SEM image of an active material layer of an Example 1 and an image after differently coloring them.

### <Measurement for BET Specific Surface Areas of First and Second Lithium Composite Oxide Particles>

BET specific surface areas of the first and second lithium composite oxide particles were measured in accordance with a nitrogen adsorption method using a commercially available specific surface area measurement device ("Macsorb Model-1208" (provided by MOUNTECH)). A BET calculation value was found by calculating a total BET specific surface area of the active material present in the vicinity of the surface (surficial layer) of the active material layer opposite to the core body side in accordance with a mass ratio of the first and second lithium composite oxide particles.

### <Production of Negative Plate>

Graphite (C) serving as a negative electrode active material, styrene-butadiene rubber (SBR) serving as a binder, and carboxymethyl cellulose (CMC) serving as a thickener were mixed in an ion-exchanged water at a mass ratio of C:SBR:CMC = 98:1:1, thereby preparing a negative electrode active material layer formation slurry. The negative electrode active material layer formation slurry was applied onto a copper foil, and was dried to form a negative electrode active material layer. The negative electrode active material layer was roll-pressed by a roller to attain a predetermined density and was then cut to a predetermined size, thereby producing a negative electrode sheet.

### <Production of Lithium Ion Secondary Battery for Evaluation>

A porous polyolefin sheet was prepared as a separator. A positive electrode plate produced in each of the Example and Comparative Examples and the negative electrode plate produced above were stacked on each other with the separator being interposed therebetween, thereby producing a stacked type electrode assembly. An electrode terminal was attached to the stacked type electrode assembly, this was inserted into a battery case composed of an aluminum laminate sheet, and a non-aqueous electrolyte was injected thereinto. As the non-aqueous electrolyte, a non-aqueous electrolyte was employed in which LiPF₆ serving as a supporting salt was dissolved at a concentration of 1 mol/L in a mixed solvent including ethylene carbonate (EC) and ethyl methyl carbonate (EMC) at a volume ratio of EC:EMC = 30:70 with vinylene carbonate being added to have 0.3 mass%. Then, the battery case was sealed to obtain a lithium ion secondary battery for evaluation.

### <Evaluations on Output Resistance (Internal Resistance Ratio Measurement) and Cycling Performance>

As initial charging, each lithium ion secondary battery for evaluation was subjected to constant-current charging with a current density of 0.2 mA/cm² under a temperature environment of 25°C until 4.25 V was attained, and was then subjected to constant-voltage charging at a voltage of 4.25 V until a current density of 0.04 mA/cm² was attained. After resting for 10 minutes, each lithium ion secondary battery for evaluation was subjected to constant-current discharging with a current density of 0.2 mA/cm² until 3.0 V was attained. Each lithium ion secondary battery for evaluation was adjusted to each of SOCs of 50% and 80% so as to measure an internal resistance ratio. Each lithium ion secondary battery for evaluation was placed under a temperature environment of 25°C, was subjected to constant-current charging with a current density of 0.2 mA/cm²until 4.18 V was attained, and was then subjected to constant-voltage charging until a current density of 0.04 mA/cm² was attained. Thereafter, constant-current discharging was performed with a current density of 0.2 mA/cm²until 3.48 V was attained. A discharging capacity on this occasion was found. This charging/discharging was regarded as one cycle, and 400 cycles of charging/discharging were repeated for each lithium ion secondary battery for evaluation. A discharging capacity in the 400th cycle was found. A capacity retention (%) was found as an index of the cycling performance in accordance with the following formula: (discharging capacity in the 400th charging/discharging cycle / discharging capacity in the first charging/discharging cycle) × 100.

### <Example 1>

As the first lithium composite oxide particles (small particles), LiNi_{0.6}Co_{0.2}Mn_{0.2}O₂ in the form of single-particles with an average particle size (D50) of 3.9 µm and a BET specific surface area of 0.60 m²/g was prepared. As the second lithium composite oxide particles (large particles), LiNi_{0.55}Co_{0.20}Mn_{0.25}O₂ in the form of secondary particles with an average primary particle size of 1.8 µm, an average particle size (D50) of 16.5 µm, and a BET specific surface area of 0.20 m²/g was prepared.

The first lithium composite oxide particles and the second lithium composite oxide particles were mixed at a mass ratio of 30:70, thereby preparing active material particles 1. Active material particles 1, carbon black (CNT) serving as a conductive material, and polyvinylidene difluoride (PVDF) serving as a binder were mixed at a mass ratio of the active material particles : CNT : PVDF = 97.5 : 1.5 : 1.0, and an appropriate amount of N-methyl-2-pyrrolidone (NMP) was added to the obtained mixture, thereby preparing a positive electrode active material layer formation slurry A.

The first lithium composite oxide particles and the second lithium composite oxide particles were mixed at a mass ratio of 70:30, thereby preparing active material particles 2. Active material particles 2, AB serving as a conductive material, and polyvinylidene difluoride (PVDF) serving as a binder were mixed at a mass ratio of active material particles 2 : AB : PVDF = 97.5 : 1.5 : 1.0, and an appropriate amount of N-methyl-2-pyrrolidone (NMP) was added to the obtained mixture, thereby preparing a positive electrode active material layer formation slurry B.

Positive electrode active material layer formation slurry A was applied onto each of both surfaces of a core body composed of aluminum foil, and was dried to form a deep-layer dried coating film. Thereafter, positive electrode active material layer formation slurry B was applied onto the deep-layer dried coating film so as to have a weight comparable to that of the deep-layer dried coating film, and was dried to form a surface-layer dried coating film. The active material layer having such a two-layer structure was roll-pressed by a roller, and was then cut to a predetermined size, thereby producing a positive electrode plate having the active material layer including the deep layer and the surficial layer. Results are shown in Table 1.

### <Comparative Examples 1 to 3>

Positive electrode plates of Comparative Examples 1 to 3 were produced in the same manner as in Example 1 except that respective mass ratios of the first lithium composite oxide particles (small particles) and the second lithium composite oxide particles (large particles) in active material particles 1 used in positive electrode active material layer formation slurries A were 70:30, 50:50, and 10:90 and respective mass ratios of the first lithium composite oxide particles (small particles) and the second lithium composite oxide particles (large particles) in active material particles 2 used in positive electrode active material layer formation slurry B were 30:70, 50:50, and 90:10. Results are shown in Table 1.

**[Table 1]**

| | Area Ratio of Large Particles (%) | | Large Particle Area Ratio | Particle Packing Density (g/cm³) | BET Calculation Value (m²/g) | Cycle Capacity Retention (%) | Output Resistance (mΩ) | |
|---|---|---|---|---|---|---|---|---|
| | Vicinity of Surface of Active Material Layer Opposite to Core Body Side (Surficial Layer) | Vicinity of Surface of Active Material Layer on Core Body Side (Deep Layer) | | | | | SOC 50% | SOC 80% |
| Comparative Example 1 | 73.6 | 27.5 | 2.68 | 3.26 | 0.28 | 85.6 | 88 | 86 |
| Comparative Example 2 | 52.7 | 46.7 | 1.13 | 3.27 | 0.36 | 86.7 | 85 | 84 |
| Example 1 | 27.3 | 67.9 | 0.40 | 3.26 | 0.44 | 87.9 | 84 | 83 |
| Comparative Example 3 | 9.8 | 89.4 | 0.11 | 3.19 | 0.51 | 86.5 | 82 | 81 |

As shown in Table 1, improved cycling performance was obtained in Example 1. This is presumably due to the following reason: as the amount of the single-particles (first lithium composite oxide particles) present in the vicinity of the surface of the active material layer opposite to the core body side is larger, fewer cracks are caused by the performed cycles. Further, in Example 1, the output resistance tends to become excellent. This is presumably because the BET specific surface area of the active material present in the vicinity of the surface of the active material layer opposite to the core body side was large. No improved cycling performance was obtained in Comparative Example 3, presumably due to the following reason: the BET specific surface area of the active material present in the vicinity of the surface of the active material layer opposite to the core body side was increased to result in shortage of AB due to expansion and contraction caused by charging and discharging.

Although the embodiments of the present invention have been described and illustrated in detail, it is clearly understood that the same is by way of illustration and example only and is not to be taken by way of limitation. The scope of the present invention is defined by the terms of the claims, and is intended to include any modifications within the scope and meaning equivalent to the terms of the claims.

## Claims

1. A positive electrode plate (10) comprising an active material layer (12) and a core body (11), wherein
the active material layer (12) includes an active material particle,
the active material particle includes a large particle (23) and a small particle (24), and
a larger amount of the large particle (23) is present in a vicinity of a surface of the active material layer (12) on the core body (11) side than in a vicinity of a surface of the active material layer (12) opposite to the core body (11).

2. The positive electrode plate according to claim 1, wherein in a cross section of the active material layer (12), a ratio of a total area of the large particle (23) present in the vicinity of the surface opposite to the core body (11) to a total area of the large particle (23) present in the vicinity of the surface on the core body (11) side is 0.2 or more and less than 1.0.

3. The positive electrode plate according to claim 1, wherein the small particle (24) includes a single-crystal particle or a polycrystalline particle.

4. The positive electrode plate according to claim 1, wherein the large particle (23) has a grain boundary.

5. The positive electrode plate according to claim 1, wherein the large particle (23) includes a secondary particle in which a primary particle is aggregated.

6. The positive electrode plate according to claim 1, wherein a particle packing density of the active material layer (12) is 3.0 to 3.8 g/cm³.

7. The positive electrode plate according to claim 1, wherein the active material layer (12) has a deep layer (31) disposed on the core body (11) side, and a surficial layer (32) disposed on a side of the deep layer (31) opposite to the core body (11) side.

8. The positive electrode plate according to claim 1, wherein a mass ratio (a surficial layer (32) / a deep layer (31)) of the large particle (23) in the surficial layer (32) and the large particle (23) in the deep layer (31) is more than 1/9 and less than 1.

9. A non-aqueous electrolyte secondary battery comprising the positive electrode plate (10) according to claim 1.
